# EUROPÄISCHE PATENTANMELDUNG

(11) **EP 0 732 711 A1**
(43) Veröffentlichungstag der Anmeldung: **18.09.1996**
(21) Anmeldenummer: 96103350.3
(22) Anmeldetag: 04.03.1996
(51) Int. Cl.: H01G 2/10

(54) **Elektrischer Kondensator**

(30) Priorität: 17.03.1995 DE 19509866
(71) Anmelder: SIEMENS MATSUSHITA COMPONENTS GmbH & CO KG, D-81541 München (DE)
(72) Erfinder: Goessmann, Hubertus, Dipl.-Ing. (FH), 89564 Nattheim (DE); Majer, Reiner, Dipl.-Ing. (FH), 89568 Hermaringen (DE); Nassal, Joachim, Dipl.-Ing. (FH), 89518 Heidenheim (DE)
(74) Vertreter: Fuchs, Franz-Josef, Dr.-Ing.

(57) **Zusammenfassung**

Ein elektrischer Kondensator, der zumindest einen Wickel (1) enthält, ist mittels eines Befestigungsteils (7) positioniert und zentriert in ein Gehäuse (2) eingebaut.Das Befestigungsteil (7) besteht aus einem zentrisch axial im Wickel (1) angeordneten geteilten Befestigungsbolzen, dessen Einzelteile (8,9) über eine Feder (10) miteinander verbunden sind. Ferner ist das Befestigungsteil (7) in im Gehäuse (2) angeordneten Aussparungen (12) eingerastet.

## Beschreibung

Die Erfindung betrifft einen elektrischen, insbesondere stirnkontaktierten, Kondensator, der zumindest einen Wickel enthält, der mittels eines Befestigungsteils positioniert und zentriert in ein Gehäuse eingebaut ist.

Ein derartiger Kondensator ist aus der EP 0 202 619 B1 bekannt. Dort wird als Befestigungsteil eine radial auf dem Wickel aufliegende Halte-/Isolierkappe verwendet, die durch eine im Gehäuse nach dem Einbau von Wickel und Befestigungsteil angebrachte Sicke festgelegt ist.

Ferner ist aus der DE 30 47 815 A1 ebenfalls ein Kondensator bekannt, der durch eine als Befestigungsteil dienende Isolierkappe im Gehäuse fixiert ist. Auch hierbei erfolgt die Fixierung nach dem Einbau durch eine nachträglich angebrachte Sicke.

Bei den bekannten Ausführungsformen ist somit ein zusätzlicher Verfahrensschritt, nämlich das Fixieren durch eine Sicke erforderlich.

Aufgabe der vorliegenden Erfindung ist es, den Kondensator der eingangs genannten Art derart weiterzubilden, daß eine exakte Positionierung und Zentrierung des Kondensatorwickels im Gehäuse durch einfache Maßnahmen ohne zusätzliche Verfahrensschritte erzielt wird.

Diese Aufgabe wird erfindungsgemäß dadurch gelöst, daß das Befestigungsteil aus einem zentrisch axial im Wickel angeordneten geteilten Befestigungsbolzen besteht, dessen Einzelteile über eine Feder miteinander verbunden sind, und daß das Befestigungsteil in im Gehäuse angeordneten Aussparungen eingerastet ist.

Vorteilhafte Ausgestaltungen des Gegenstandes der Erfindung sind in den Unteransprüchen angeführt.

Die Erfindung wird im folgenden anhand von Ausführungsbeispielen erläutert.

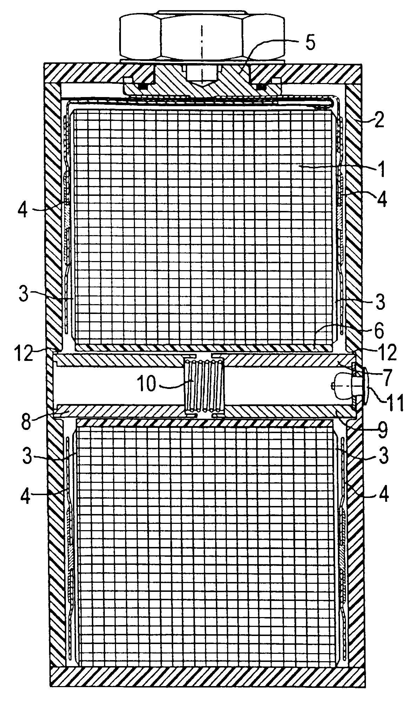

In der dazugehörenden Zeichnung mit einer einzigen Figur ist als Schnittbild ein Kondensatorwickel 1 dargestellt, der in ein Gehäuse 2 eingebaut ist. Der Kondensatorwickel 1 besitzt auf seinen Stirnseiten Stirnkontaktschichten 3 an denen Verschaltungsbleche 4 ankontaktiert sind. Die Verschaltungsbleche 4 sind mit elektrischen Anschlüssen 5 verbunden, von denen in der Zeichnung nur einer dargestellt ist; der zweite Anschluß befindet sich hinter dem in der Figur sichtbaren Anschluß. Der Kondensatorwickel 1 ist auf ein Kernrohr 6 aufgewickelt, das als Führung für das Befestigungsteil 7 dient. Das Befestigungsteil 7 besteht aus zwei Bolzen 8,9, die über eine mittig angeordnete Feder 10 miteinander verbunden sind. Die Feder 10 sorgt für sowohl den toleranz- als auch den temperaturabhängigen Längenausgleich von Gehäuse 2 und eingebautem Kondensatorwickel 1.

Das Befestigungsteil 7 ist in der Wand des Gehäuses 2 durch einen Blindniet 11 fixiert. In der Innenwand des Gehäuses 2 sind Aussparungen 12 angeordnet in die das Befestigungsteil 7 nach erfolgtem Einbau einrastet. Dadurch erfolgt eine werkstoffunabhängige Zentrierung, Positionierung und Fixierung des Kondensatorwickels 1 im Gehäuse 2, wodurch der Kondensatorwickel 1 allseitig in seiner Lage festgelegt ist. Eine zusätzliche Anordnung einer Sicke im Gehäuse 2 ist bei der Ausführungsform nach der Erfindung nicht mehr erforderlich.

Das Gehäuse 2 kann sowohl aus Kunststoff (gegebenenfalls mit Verstärkung) als auch aus Metall bestehen. Die Bolzen 8,9 können elektrisch verbunden aus leitendem oder elektrisch nicht verbunden aus nichtleitendem Material bestehen.

Neben der in der Zeichnung dargestellten Führung des Befestigungsteils 7 durch das Kernrohr 6 kann die Führung des Befestigungsteils 7 auch durch entsprechende Ausgestaltung der Verschaltungsbleche 4 erfolgen. Hierbei muß das Befestigungsteil 7 elektrisch nicht leitend sein, damit ein Kurzschluß zwischen den Stirnkontaktschichten 3 vermieden wird.

Weiterhin können mit der dargestellten Positionierung durch das Befestigungsteil 7 auch Mehrwickelausführungen im Gehäuse 2 festgelegt werden.

Beim Einbau des Kondensatorwickels 1 in das Gehäuse 2 werden die Bolzen 8,9 gegeneinander gedrückt in das Gehäuse 2 eingeführt bis das Befestigungsteil 7 unter Wirkung der Feder 10 in die Aussparungen 12 einrastet. Anschließend kann die Fixierung durch den Blindniet 11 erfolgen, was aber nicht zwingend erforderlich ist, da durch die Aussparungen 12 und die Wirkung der Feder 10 auch eine hinreichende Fixierung gewährleistet ist.

Bei Gehäusen mit dünnen Wandstärken kann das Befestigungsteil und gegebenenfalls das Kernrohr auch über Schraub- oder Klemmelemente mit dem Gehäuse verspannt sein.

## Patentansprüche

1. Elektrischer, insbesondere stirnkontaktierter, Kondensator, der zumindest einen Wickel (1) enthält, der mittels eines Befestigungsteils (7) positioniert und zentriert in ein Gehäuse (2) eingebaut ist,
**dadurch gekennzeichnet,**
daß das Befestigungsteil (7) aus einem zentrisch axial im Wickel angeordneten geteilten Befestigungsbolzen besteht, dessen Einzelteile (8,9) über eine Feder (10) miteinander verbunden sind, und daß das Befestigungsteil (7) in im Gehäuse (2) angeordneten Aussparungen (12) eingerastet ist.

2. Elektrischer Kondensator nach Anspruch 1,
**dadurch gekennzeichnet,**
daß das Befestigungsteil (7) in einem im Wickel (1) angeordneten Kernrohr (6) geführt ist.

3. Elektrischer Kondensator nach Anspruch 1,
**dadurch gekennzeichnet,**
daß das Befestigungsteil (7) durch an den Stirnkontaktschichten (3) angeordneten Befestigungsblechen (4) geführt ist.

4. Elektrischer Kondensator nach einem der Ansprüche 1 bis 3,
**dadurch gekennzeichnet,**
daß das Befestigungsteil (7) elektrisch leitend ist.

5. Elektrischer Kondensator nach einem der Ansprüche 1 bis 3,
**dadurch gekennzeichnet,**
daß das Befestigungsteil (7) elektrisch nicht leitend ist.

6. Elektrischer Kondensator nach einem der Ansprüche 1 bis 5,
**dadurch gekennzeichnet,**
daß das Gehäuse (2) aus Kunststoff besteht.

7. Elektrischer Kondensator nach einem der Ansprüche 1 bis 5,
**dadurch gekennzeichnet,**
daß Gehäuse (2) aus Metall besteht.

8. Elektrischer Kondensator nach einem der Ansprüche 1 bis 7,
**dadurch gekennzeichnet,**
daß das Befestigungsteil (7) durch einen Blindniet (11) am Gehäuse (2) fixiert ist.

9. Elektrischer Kondensator nach einem der Ansprüche 1 bis 7,
**dadurch gekennzeichnet,**
daß das Befestigungsteil (7) durch Schraub- oder Klemmelemente mit dem Gehäuse (2) verspannt ist.
